# EUROPEAN PATENT APPLICATION

(11) **EP 4 043 751 A1**
(43) Date of publication of application: **17.08.2022**
(21) Application number: 21156280.6
(22) Date of filing: 10.02.2021
(51) Int. Cl.: F16F 9/46, F16F 9/348

(54) **VALVE ARRANGEMENT FOR A SHOCK ABSORBER**

(71) Applicant: Öhlins Racing AB, 194 27 Upplands Väsby (SE)
(72) Inventor: LARSSON, Fredrik, 553 23 Jönköping (SE)
(74) Representative: AWA Sweden AB

(57) **Abstract**

The present disclosure relates to a valve arrangement for a shock absorber. The valve arrangement (1) comprises. The valve arrangement comprises a valve housing comprising a first and a second port and a pilot chamber being in fluid communication with said first and/or second port, a pilot pressure is defined by a hydraulic pressure in said pilot chamber, a main valve member being axially movably along a longitudinal axis in said valve housing and being arranged to interact with a main valve seat of said valve housing in order to restrict a main fluid flow between said first and second ports in response to said pilot pressure acting on said main valve member. Further, the main valve member is resiliently loaded in a steady-state position from where it is movable in both directions along the longitudinal axis and is configured to, during an initial pressure increase of the main fluid, move in a direction away from the pilot chamber. The disclosure further relates to a method for controlling a damping medium flow in a shock absorber.

## Description

### Technical Field

The invention relates to a valve arrangement for a shock absorber for regulating a damping medium flow between the damping chambers of the shock absorber, and in particular to a valve arrangement for avoiding overshooting.

### Background

Valve arrangements in vehicles are used for smoothening the ride by absorbing some of the vibrations in the damper without transferring the vibrations to the chassis.

State of the art valve arrangements for use in vehicles such as cars or motorcycles, may have an electrically controlled valve arrangements such as the one shown in EP18157676. In shock absorbers that include pilot valves, a pressure regulator, i.e. a valve arrangement, is used to control a flow of damping medium between a compression chamber and a rebound chamber during a reciprocal motion of a piston in a damping medium filled chamber of the shock absorber. The piston, via a piston rod, is connected either to a wheel or a chassis, whereas the chamber is connected to one of the wheel or chassis that the piston is not connected to. During a compression stroke the piston moves axially in a direction towards the compression chamber and thereby pressurizes the damping medium in the compression chamber. During a rebound stroke, the piston moves axially towards the rebound chamber, i.e. in the opposite direction, and thereby pressurizes the damping medium in the rebound chamber.

The pressure in the flow of damping medium in the shock absorber is controlled by a valve arrangement. Pressure regulators in shock absorbers are usually provided with an axially movable or deflectable valve member, such as a washer, cone or shim that acts against a seat part. The pressure control is achieved by equilibrium or balance of forces, for example equilibrium between a pressure and/or flow force acting on the valve member in one direction and counteracting or opposing forces, such as one or more of a spring force, friction force and pilot pressure force acting on the valve member in the opposite direction. When the piston of the shock absorber moves at a certain speed such that the pressure and/or flow force become greater than the opposing or counteracting forces, the movable valve member is forced away from the seat part, thereby opening a flow passage. Thus, the movable valve member is forced to open at a stroke defined as a function of the flow produced by the pressure acting on the regulating area of the pressure regulator.

A challenge with pilot pressure controlled valve arrangements is to reduce overshoots resulting from the initial pressure increase in the pilot chamber at the initial opening of the valve assembly. Such overshoot typically affects the damping characteristics negatively.

Thus, there is a need for an improved valve arrangement for a shock absorber which alleviates the issues of overshooting.

### Summary of invention

It is an object of the present invention to provide an improved solution that alleviates the mentioned drawbacks with present solutions. Furthermore, it is an object to provide a method for controlling a valve arrangement that also alleviates the above mentioned problem with overshooting in shock absorbers.

The invention is based on the inventor's realization that the above objectives may be achieved by incorporating a valve arrangement having a design and function that allows the pilot chamber volume to initially be increased instead of decreased, problems with overshoots may be alleviated. It has also been shown through testing that such an arrangement reduces noise vibration harshness and therefore increased on-road secondary comfort.

According to a first aspect of the invention, a valve arrangement for a shock absorber is provided. The valve arrangement comprises a valve housing comprising a first and a second port and a pilot chamber being in fluid communication with said first and/or second port. Further a pilot pressure is defined by a hydraulic pressure in said pilot chamber. The arrangement further comprises a main valve member being axially movably along a longitudinal axis in said valve housing and being arranged to interact with a main valve seat of said valve housing in order to restrict a main fluid flow between said first and second ports in response to said pilot pressure acting on said main valve member. The arrangement is characterized in that the main valve member is resiliently loaded in a steady-state position from where it is movable in both directions along the longitudinal axis and is configured to, during an initial pressure increase of the main fluid, move in a direction away from the pilot chamber, so as to increase the volume of the pilot chamber.

Hereby, a valve arrangement which alleviates overshooting is provided, as the increased volume of the pilot chamber together with the resiliently loaded main valve member will provide a damper that opens without an increasing force.

When the main valve member moves away from the pilot chamber to increase its volume, the main valve member is moved out of the steady state position into a pre-tensioned position balanced by the pressure in the pilot chamber.

In one embodiment, the pressure area in the pilot valve member is larger than the pressure area on the main valve member in a closed position. Hereby, while having substantially the same pressure in the pilot chamber as on the opposite side of the main valve member, the main valve member is moved away from the pilot chamber. The area difference generates the pretension of the main valve member. Once the main valve member is moved away from the seat to allow a main fluid flow between the first and second chamber, the pressure will decrease.

In the context of this application, an initial pressure increase means when the pressure of the main fluid from the first port is increased and before any main fluid flow is allowed between the first port and the second port.

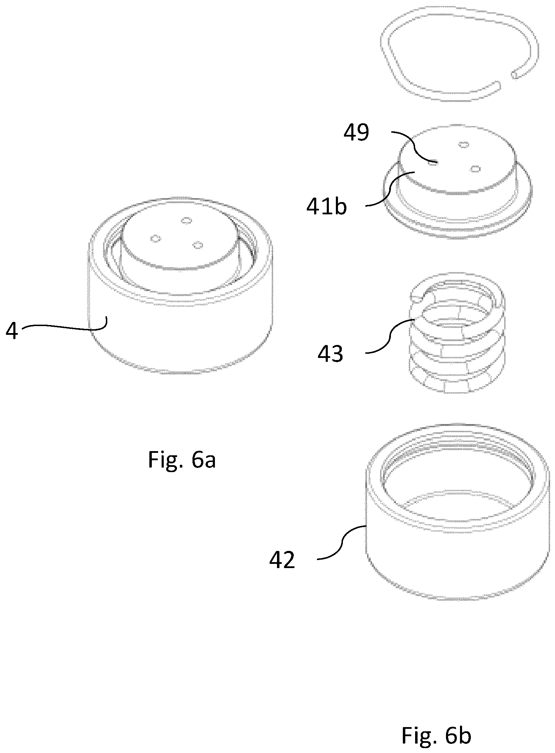

In the context of this application, that the main valve member is "arranged to interact with a main valve seat" means that the main valve member's position relative the main valve seat will restrict a main fluid flow between the first and second port. The main valve member and the main valve seat does not necessarily interact directly but can (as is shown in figures) be interacting by means of intermediate members such as a shim stack or a washer. The intermediate member may also be a thicker washer acting as a movable seat member. This is further illustrated in relation to figures 6a-7, where a moveable valve member with a circumferential aperture is used in order to achieve a soft-opening function. However, since it is still the main valve members position that determines the restricting opening towards the seat 9, it is to be read as also being "arranged to interact with a main valve seat".

In the context of this application, being "resiliently loaded in a steady-state-position" should be understood as that the member being in such position must be exerted to a force (e.g. fluid pressure) to be moved out of the position, and as the member moves, the resilient load on the member is increased towards the steady-state position.

In one embodiment, the main valve member is configured to, when the pressure of the main fluid flow exceeds a predetermined value being higher than the initial pressure increase, move towards the pilot chamber so as to decrease the volume of the pilot chamber.

Hereby, the movement of the main valve member will have a reversed movement as the pressure increases over the predetermined value. This value can be selected/configured by choosing resilient members, such as shim, shim stacks or coil springs (or a combination of such) and pressure areas on the main valve member so that a specific pressure from the main fluid will generate the movement as described. Further details to this are explained together with the figures in the detailed description.

In one embodiment, the predetermined value is selected to correspond to a pressure level where the main valve member starts to move to allow a main fluid flow towards the second port.

In yet one embodiment, the initial pressure increases and said predetermined value both occur during a main fluid pressure increase from the first port.

In one embodiment the main valve member is resiliently loaded by a first springing means on a first side of the main valve member and a second springing means on an opposite second side of the main valve member.

Hereby, the springing means (e.g. coil springs and/or shims or resilient member such as flexible materials of any kind) may be selected so that a specific steady-state position on, and/or load is exerted onto, the main valve member.

In yet one embodiment, the first springing means is at least one shim. In one embodiment it is a shim stack. In one embodiment, the second springing means is a coil spring.

In one embodiment, the first springing means is arranged between the main valve member and the main valve seat. Hereby, the springing means may exert a springing force away from the main valve seat.

In yet one embodiment, the main valve member comprises a pilot chamber exposed pressure area being larger than a pressure area on an axially opposite side acting on the main valve member when the main valve member is in said steady-state position.

Hereby, during the initial pressure increase, the main valve member may be move towards the main valve seat so as to increase the pilot chamber volume.

In one embodiment, the main valve member comprises a bypass channel fluidly connecting said first port to said pilot chamber. Hereby, the fluid may be transferred from the first port to the pilot chamber, and the pressure will be substantially equal on both sides of the main valve member. The size of the bypass channel may determine the lagging of the pressure increase in the pilot chamber as compared to the pressure increase from the first port.

In yet one embodiment, the pilot pressure is actively controlled with an electrical actuator such as a solenoid or a step motor. Hereby, the valve arrangement may allow an actively controlled damping characteristics to e.g. a vehicle.

In one embodiment, the pilot pressure is controlled with a failsafe mechanical springing valve when the actuator is fed a current below a threshold value. In one embodiment, the pilot pressure is controlled with a failsafe mechanical springing valve when the actuator is fed a current below 0.2A. Hereby, if any component fails, the pilot pressure is still controlled, but by means of a mechanical springing valve. Although an electrical component fails, the current is usually not 0, due to rest currents and/or induced currents.

In yet one embodiment, the main valve body moves away from the pilot chamber upon the initial pressure increase with a stroke length of about 0.05-0.5mm, preferably about 0.1 mm, when it changes direction and moves towards the pilot chamber. Hereby, it is only the initial part of the movement that is reversed, allowing the main valve member to move in the opposite direction after the initial movement.

In one embodiment, the valve arrangement further comprises a calibration spacer for calibrating the maximum load of the first springing means. Hereby, the position at which the springing means, such as a shim, is arranged against may be axially moved to control the maximum load.

According to one aspect of the invention, a shock absorber comprising at least one valve arrangement according to any one of herein described embodiments may be provided. Hereby, a shock absorber alleviating the problems with overshooting may be provided. Such a shock absorber may be implemented on a vehicle such as a car, motorcycle, lorry, truck, or other vehicles with shock absorbers.

According to yet one aspect of the invention, the above mention problems are at least alleviated by means of a method for controlling a damping medium flow between damping chambers of a shock absorber by means of a valve arrangement comprising a valve housing comprising a first and a second port a pilot chamber being in fluid communication with said first and/or second port, wherein a pilot pressure is defined by a hydraulic pressure in said pilot chamber, and a main valve member being axially movably arranged in said valve housing and being arranged to interact with a main valve seat of said valve housing in order to restrict a main fluid flow between said first and second ports in response to said pilot pressure acting on said main valve member. The method comprises the steps of
- resiliently loading a valve member in a steady-state position, and
- moving the main valve member, during an initial pressure increase of the main fluid, in a direction away from the pilot chamber, so as to increase the volume of the pilot chamber.

The advantages of the method are in large analogous with the advantages described in conjunction with the valve arrangement, being providing a valve arrangement that alleviates the problems with overshooting and provides a damping characteristics with improved dynamic properties.

In one embodiment, the method further comprises the subsequent step of moving the main valve member in a direction towards the pilot chamber, so as to subsequently decrease the volume of the pilot chamber, when the pressure of the main fluid flow exceeds a predetermined value being higher than the initial pressure increase.

Any embodiments or features described in relation to the device may have corresponding functions in the method, and vice versa. Thus, the different aspects of the inventions form a single inventive concept that can be combined in any way, as long as being compatible embodiments.

The invention is defined by the appended independent claims, with some preferred embodiments being set forth in the appended dependent claims, in the following description and in the drawings.

### Brief Description of the Drawings

The invention will in the following be described in more detail with reference to the enclosed drawings, wherein:
Fig. 1 shows a cross-sectional view of a valve arrangement according to one embodiment of the invention,
Fig. 2a shows a side view of a shock absorber having two valve arrangements,
Fig. 2b shows a side view of a shock absorber having a single valve arrangement,
Fig. 3a shows an overview of the valve arrangement according to one embodiment of the invention,
Fig. 3b shows an exploded perspective view of the valve arrangement according to one embodiment of the invention,
Fig. 4a shows an overview of the main valve assembly according to one embodiment of the invention,
Fig. 4b shows an exploded perspective view of the main valve assembly according to one embodiment of the invention,
Fig. 5a - 5c show cross sectional views of the valve arrangement according to one embodiment of the invention in different positions,
Fig. 6a shows an overview of the main valve assembly according to one embodiment of the invention,
Fig. 6b shows an exploded perspective view of the main valve assembly according to one embodiment of the invention,
Fig. 7 shows a cross sectional view of the valve arrangement according to one embodiment of the invention,
Fig. 8 shows a flow diagram of the method for controlling the damping fluid flow according to one embodiment,
Fig. 9 shows a graph of the main valve members axial position in relation to the system pressure, and
Fig. 10 shows a graph of the main fluid flow in relation to the system pressure.

### Detailed description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

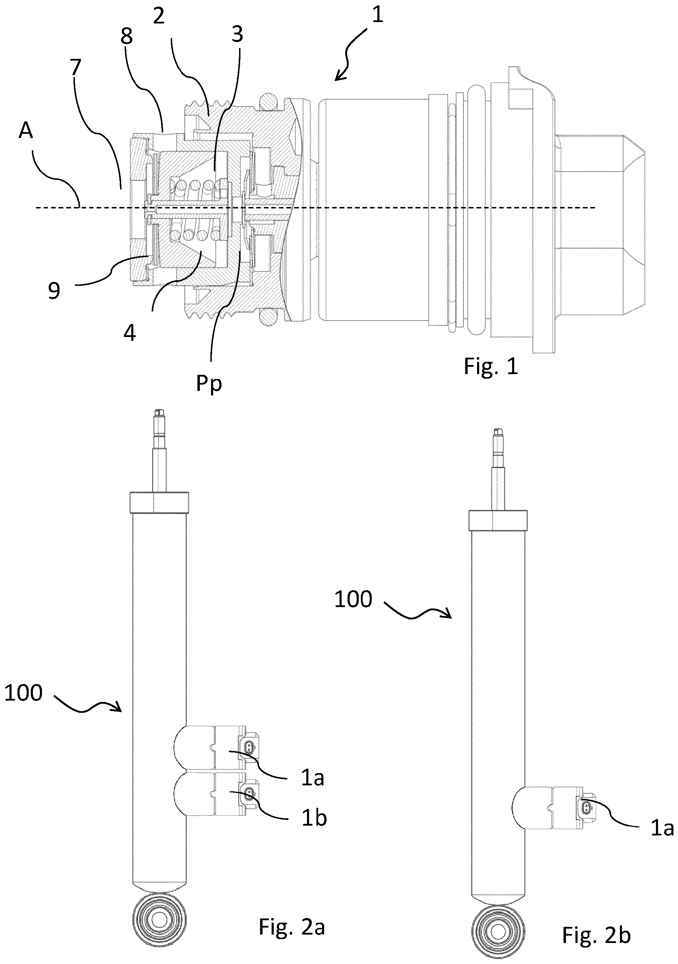

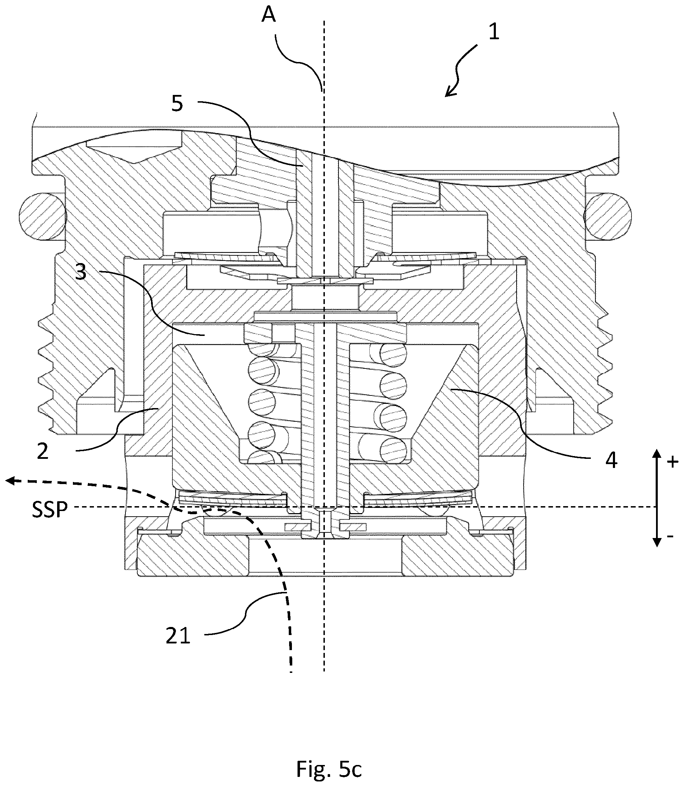

Fig. 1 shows an overview figure in a cross-sectional view of a valve arrangement 1 according to one embodiment of the invention. The valve arrangement comprises a valve housing 2 having a first and second port 7, 8. The valve arrangement is configured to control a main fluid flow between the first 7 and second 8 port. Further, the figure illustrates that that the valve arrangement comprises a pilot chamber 3 being in fluid communication with the first port 7 and the second port 8. The pilot chamber is adapted to keep the fluid in a pilot pressure Pp which is defined by a hydraulic pressure in said pilot chamber. Moreover, the arrangement comprises a main valve member 4 being axially movably along a longitudinal axis A going through a central portion of the valve housing 2. The main valve member is configured to interact with a main valve seat 9 of the valve housing so as to restrict a main fluid flow 21 (illustrated in fig 5c) between the first and second ports 7, 8. The main fluid flow is regulated in response to the pilot pressure Pp acting on the main valve member.

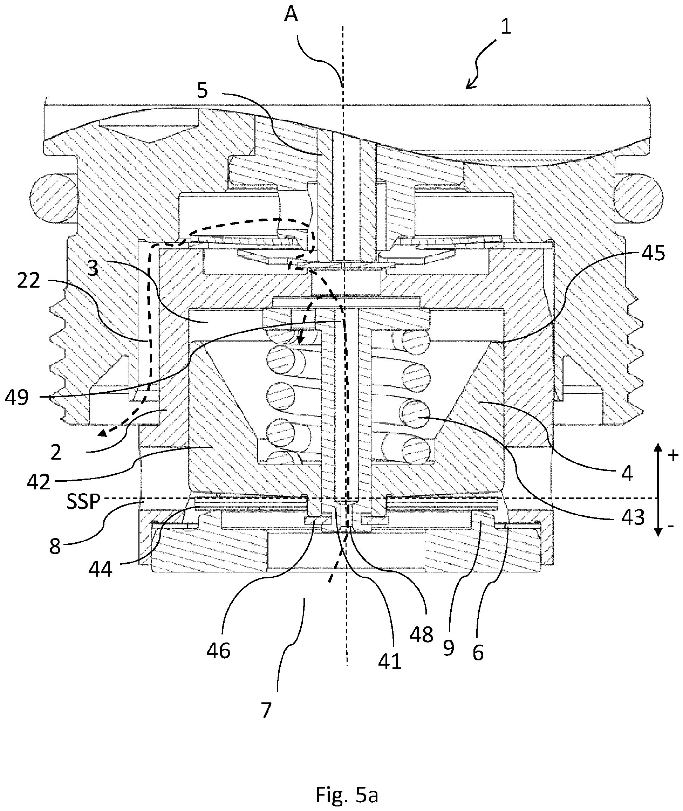

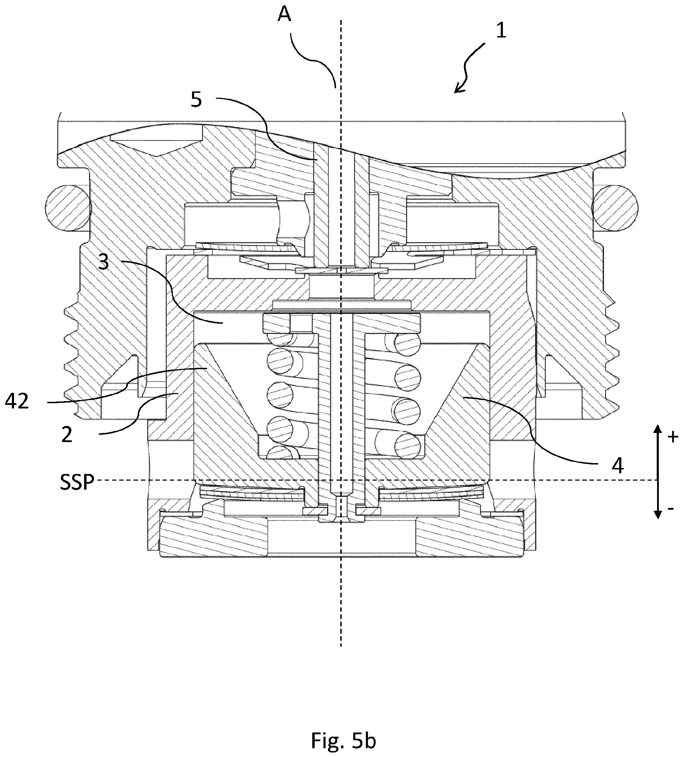

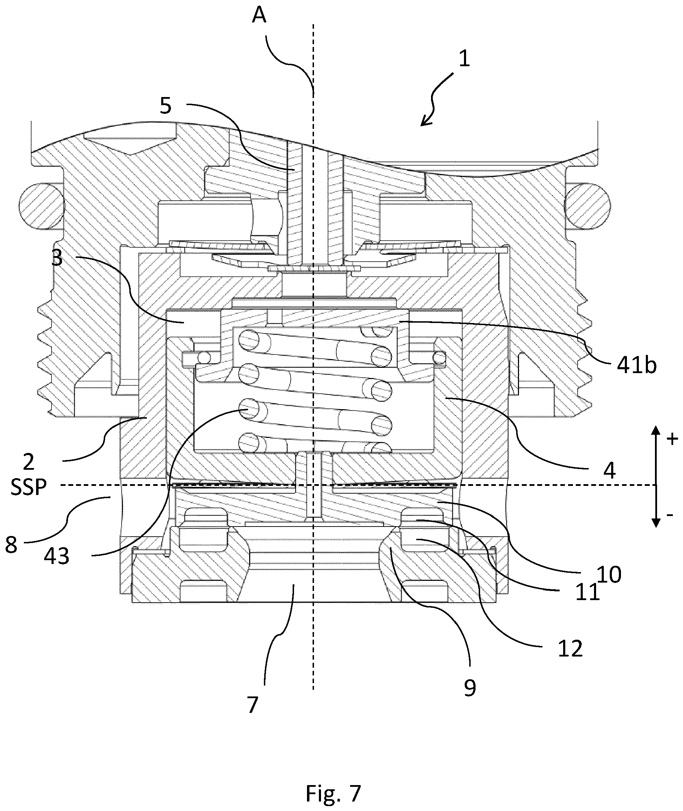

Moreover, the main valve member 4 is resiliently loaded in a steady-state position (as shown in e.g. figures 5 and 7) from where it is movable in both directions along the longitudinal axis (A). In the steady state position the main fluid flow cannot pass between the first and second port.

Fig. 2a and fig. 2b show a side views of shock absorbers 100 having two valve arrangements and one valve arrangement, respectively. In figure 2a, the two valve arrangements 1a and 1b would typically be used by having one of the valve assemblies fluidly coupled to the fluid flow in the compression stroke and the other valve assembly fluidly couple to the fluid flow in the rebound stroke. Both valve arrangements 1a and 1b may be valve arrangements as described herein, with a bidirectional main valve member, but in some embodiments the valve arrangement may be combined with another type of valve arrangement. In figure 2b the valve arrangement 1a may be a 2-way valve arrangement for handling flow in both directions, i.e. compression stroke and rebound stroke fluid flows.

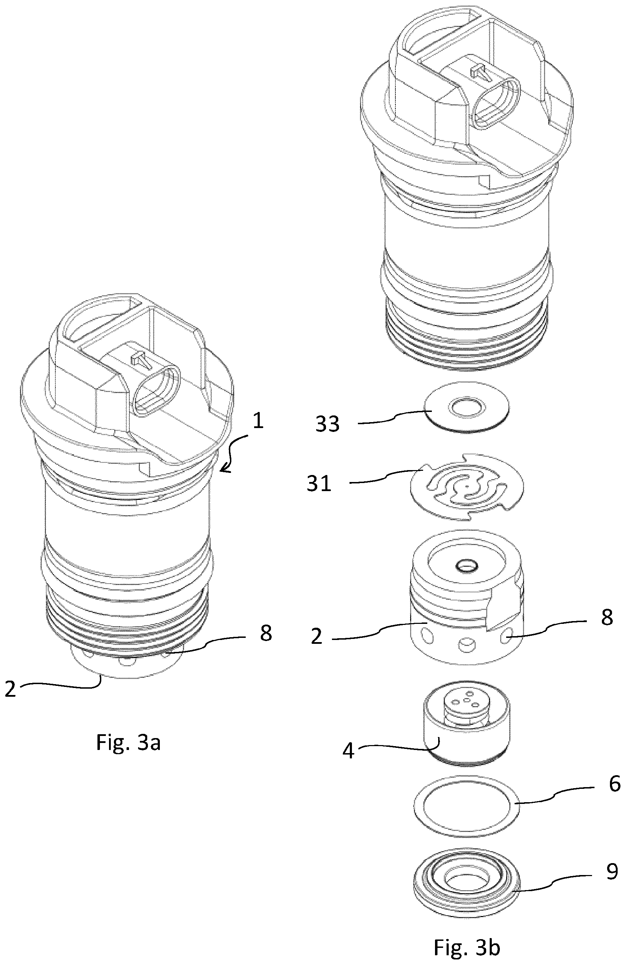

Fig. 3a and 3b show an overview of the valve arrangement 1 and an exploded perspective view of the valve arrangement, respectively. The valve arrangement comprises a cylindrical valve housing 2 with a first port 7 (not shown due to perspective view) and the second port 8. The second port in this embodiment comprises several apertures, so that the fluid flow can flow radially outwards around the circumference of the cylindrical shape.

The arrangement further comprises a failsafe shim 33 for functioning as a check valve together with a pilot shim spring 31 functioning as the seat in the check valve. In this embodiment, the shim spring 31 comprise several springing portions for creating different spring forces at different strokes of an actuator 5 acting on said spring. This is most easily understood in the cross-sectional views of figures 5a-5c.

The exploded view further illustrates the cylindrical shape of the main valve member 4 as well as the calibration washer 6 and seat portion 9.

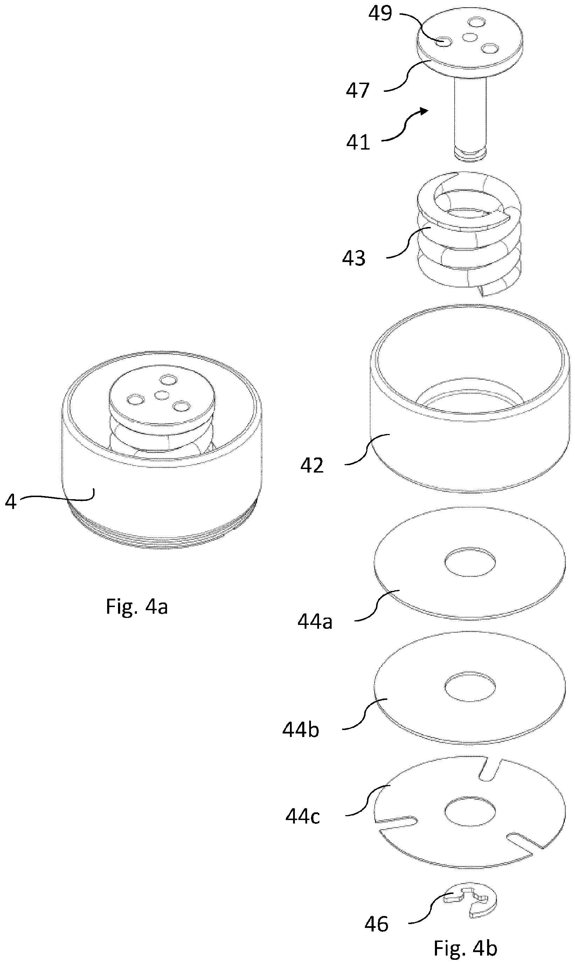

The main valve member 4 is further illustrated in detail in figures 4a and 4b, in which 4a shows an overview of the main valve assembly, and Fig. 4b shows an exploded perspective view of the main valve assembly. Again, these figures are to be understood as possible embodiments of the invention and are not necessarily the only way of carrying out the inventive concept which is defined in the claims.

The main valve member 4 comprises a central body 41 having an elongated cylindrical shape with a head portion 47 having a larger circumference than the rest of the central body. The head portion 47 comprise apertures 49 for allowing the damping fluid to flow between an upper portion and a lower portion of the pilot chamber 3. A coil spring 43 is placed around the central body 41 and is sandwiched between the central body's head portion 47 and the main valve member's outer body 42. This coil spring is used for preloading the main valve member in a direction axially away from the pilot chamber 3.

Figure 4b further illustrated a shim stack having three shims 44a, 44b, 44c and a locking member in the form of a lock washer 46 for locking the central body 41 so that the shim stack is sandwiched between the lock washer 46 and the outer body 42. The shim stack may comprise more or fewer shims, with a variation of thickness and slits, so as to e.g. adjust its springing force.

Fig. 5a - 5c show cross sectional views of the valve arrangement according to one embodiment of the invention, where the main valve member is in different axial positions. In figure 5a, the main valve member is in its steady-state position SSP. In this position the coil spring member 43 may preload the main valve member towards the main valve seat 9, and the shim stack 44 (comprising shims 44a, 44b, 44c) preloads the main valve member away from the main valve seat 9. It is also possible that the coil spring member and or the shim stack 44, does not preload the main valve member until the main valve member moves out from its steady state position.

In figure 5a it is also illustrated how the actuator 5 acts on the pilot shim spring 31 to control the pilot pressure. The actuator 5 may be coupled to a solenoid or a step motor, so that the position or force of the actuator may be controlled by means of software.

The axial position of the main valve member 9 is determined by the thickness of the calibration washer 6. The calibration washer thereby also determines the preload of the shims stack 44.

Central body 41 comprises a bypass channel 48 allowing a bypass flow 22 between the first port 7 and the pilot chamber 3. The size of the bypass channel in this layout determines the lagging of the pressure increase in the pilot chamber as compared to the pressure increase in the first port.

There are several moving parts that are dependent on a number of springing means and the hydraulic pressure. Once the coil spring 43 preload is reached, a relative movement between the outer body 42, shim-stack and the central body 41 occur, where the outer body moves in positive X-direction. This is illustrated in figure 5c. However, before that, a relative movement in the negative X-direction occurs between main valve's outer body 42 and the valve housing 2 when shim-stack elastically deforms in response to the increased hydraulic pressure. This creates an inverting movement where the displacement from the main valve member initially expands the volume in the pilot chamber until the coil spring preload is reached

In figure 5b, the predetermined pressure is reached and the main valve member's 4 outer body 42 is moved in the negative axial direction, i.e. down in the figure, away from the pilot chamber and towards the main valve seat 9. This occurs during an initial pressure increase of the main fluid, so as to increase the volume of the pilot chamber 3.

The valve arrangement may be used in system pressures of 1-400 bar. Depending on the application the predetermined value may be chosen so as to reduce the overshoot in the specific application.

When moving onto figure 5c, the hydraulic pressure has increased further, so that the coil spring 43 preload is reached and outer body 42 moves in positive X-direction and a main fluid flow 21 is allowed between the first port 7 and the second port 8.

The pressure area on the outer body 42 is larger in the pilot chamber than on the opposite side of the outer body 42. Thereby, a pressure in the pilot chamber will create a preload of the shim stack 44 via the outer body 42.

It is the bypass flow passage 48 in the outer body 42 that allows pressurizing of the main valve member towards the first springing means.

Figs 6a, 6b and 7 illustrates an embodiment of the invention where a movable valve seat 10 is used. The moveable valve seat 10 comprises a first circumferential aperture 11, and the seat portion 9 also comprises a circumferential aperture 12, which cooperates with the first circumferential aperture 11. Together the two circumferential apertures 11 and 12 creates a soft opening functionality of this valve. In more detail, the two circumferential apertures 11 and 12 forms two cooperating radial displaced restrictions being fluidly coupled and serially arranged which provides a soft opening as the fluid passes from the first port 7 to the second port 8. The radially inner walls of the apertures 11, 12 forms the first restriction and the radially outer walls of the apertures 11, 12 forms the second cooperating and serially arranged restriction.

In figures 6a, 6b and 7 the central body 41 has been replaced by a top body 41b, having an aperture to house the coil spring 43 and holding it into place. The functionality of the embodiment in figures 6-7 are the same as described above, but the embodiment is included to illustrate that the invention may be designed in different ways without departing from the inventive concept.

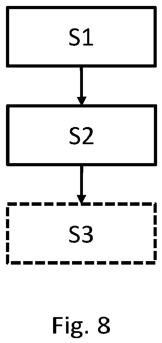

Further, Fig. 8 shows a simple flow diagram of the method for controlling the damping fluid flow according to one embodiment. The method is used for controlling the damping medium flow between damping the chambers 7, 8 of a shock absorber 100 by means of a valve arrangement 1 as described in any one of the embodiments above. The method comprises the steps of resiliently loading S1 a valve member 4 in a steady-state position. As explained above, this may be done by for example positioning the main valve member between to springing means, such as coil springs or shims or a combination thereof. In the most illustrated examples herein a shim or shim stack is used as the first springing means for creating a load away from the main valve seat, and a coil spring to create the load towards the main valve seat.

As a second step, the method comprises moving S2 the main valve member 4, during an initial pressure increase of the main fluid, in a direction away from the pilot chamber 3, so as to increase the volume of the pilot chamber. This may be achieved in a number of ways, but by doing so the damping medium may be controlled without the typical overshooting problems as shown in prior art.

Finally, an optional step is carried out by moving S3 the main valve member 4 in a direction towards the pilot chamber 3, so as to subsequently decrease the volume of the pilot chamber, when the pressure of the main fluid flow exceeds a predetermined value being higher than the initial pressure increase.

As is apparent for the person skilled in the art, functionalities described in relation to the apparatus herein may also be incorporated in the method. Examples may be that a bypass flow passage 48 described in the outer body 42 also disclosed the step of pressurizing of the main valve member towards the first springing means by a bypass flow.

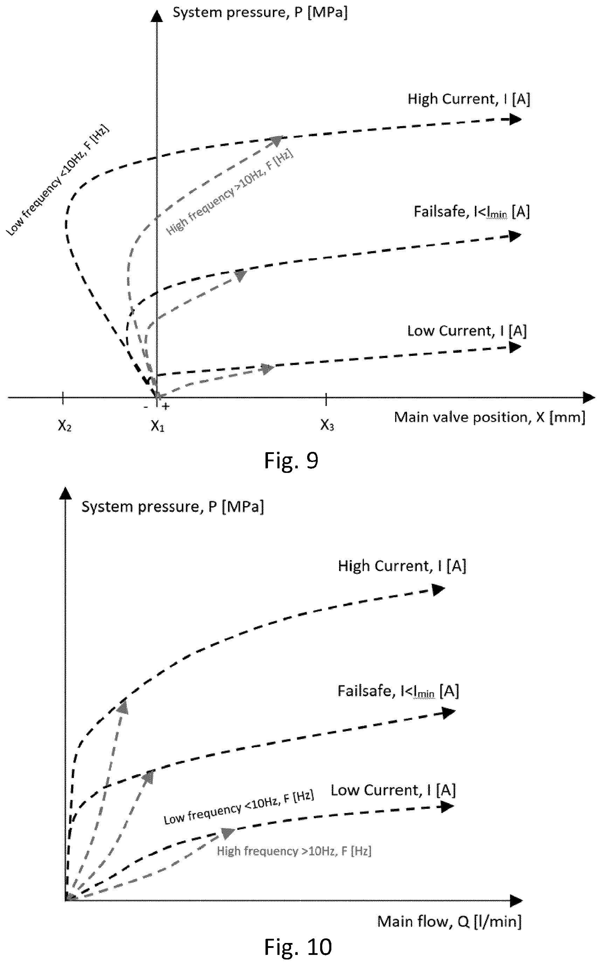

Finally, figures 9-10 are two graphs explaining the positions and fluid flow in relation to a system pressure in a hydraulic shock absorbers as described herein. As a starting point, shock absorbers can be generalized to handle two types of movements. It is movement of the vehicle chassis, which typically are movements within the frequency of 1-3Hz. Secondly, there are unevenness from the road which typically has a higher frequency such as 10-200 Hz.

In figures 9 and 10 the valve position and the main fluid flow is illustrated in three scenarios with low frequency (also called a static level, being substantially less than 10Hz) and three scenarios with high frequency (also called dynamic level, being substantially more than 10 Hz). The three scenarios are high current, fail safe and low current being fed to the solenoid controlling the actuator 5.

Starting with fig. 9 it shows a graph of the main valve members axial position in relation to the system pressure. From this figure, it is clear that the main valve member first moves from a first position X1 corresponding to the steady state position of the main valve member in a negative x-direction towards a second position X2, and then turning towards a positive direction once the system pressure increase beyond a pre-determined level. As is explained in these graphs, the predetermined level depends on the current supplied to the solenoid and thereby the actuator acting on the pilot pressure. When the movements that are to be absorbed in a shock absorber are high frequency movements, the main valve member will not have time to move as far towards the negative (X2) position before it turns an moves in the positive direction in order to open for the main fluid flow.

As illustrated in fig 10, the three scenarios result in a main flow Q which is basically zero in the beginning of the system pressure increase. The system pressure when the fluid flow begins is dependent on the current fed to the solenoid controlling the actuator force. As can be seen from figure 10, the problem with overshooting that usually occurs during high frequency damping is radically alleviated. Instead of the overshooting problem, due to the inversed initial movement of the main valve member the main fluid flow will never overshoot, instead the flow will be slightly lower than during lower frequencies in low system pressure levels.

Thus, when the components of the damper are not moving fast enough, the pressure in prior art is usually higher, i.e. creating overshooting. However, with this design, the pressure will be lower when frequency is increased.

It is possible to carry out this invention regardless if a passive control of the main valve member is used, e.g. with a springing means, or it is actively controlled with e.g. an electrical actuator such as a solenoid or step motor. It is also possible that the valve arrangement is actively controlled, but with a back-up of a passive springing means if the active control is not functioning. That is, a failsafe mode controlled valve arrangement.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A valve arrangement (1) for a shock absorber, said valve arrangement comprising:
- a valve housing (2) comprising a first and a second port (7, 8);
- a pilot chamber (3) being in fluid communication with said first and/or second port, wherein a pilot pressure (Pp) is defined by a hydraulic pressure in said pilot chamber;
- a main valve member (4) being axially movably along a longitudinal axis (A) in said valve housing and being arranged to interact with a main valve seat (9) of said valve housing in order to restrict a main fluid flow (21) between said first and second ports (7, 8) in response to said pilot pressure acting on said main valve member;
**characterized in that**
- the main valve member (4) is resiliently loaded in a steady-state position from where it is movable in both directions along the longitudinal axis (A) and is configured to, during an initial pressure increase of the main fluid, move in a direction away from the pilot chamber (3), so as to increase the volume of the pilot chamber.

2. A valve arrangement according to claim 1, wherein said main valve member (4) is configured to, when the pressure of the main fluid flow exceeds a predetermined value being higher than the initial pressure increase, move towards the pilot chamber (3) so as to decrease the volume of the pilot chamber.

3. A valve arrangement according to claim 2, wherein said initial pressure increase and said predetermined value both occur during a main fluid pressure increase from the first port (7).

4. A valve arrangement according to any one of claims 1-3, wherein said main valve member (4) is resiliently loaded by a first springing means (44) on a first side of the main valve member and a second springing means (43) on an opposite second side of the main valve member.

5. A valve arrangement according to claim 4, wherein said first springing means (44) is at least one shim.

6. A valve arrangement according to any one of claims 4 or 5, wherein said second springing means (43) is a coil spring.

7. A valve arrangement according to any one of claims 1-6, wherein said first springing means is arranged between the main valve member (4) and the main valve seat (9).

8. A valve arrangement according to any one of claims 1-7, wherein the main valve member comprises a pilot chamber exposed pressure area (45) being larger than a pressure area on an axially opposite side acting on the main valve member when the main valve member is in said steady-state position.

9. A valve arrangement according to any one of claims 1-8, wherein said main valve member (4) comprise a bypass channel (48) fluidly connecting said first port (7) to said pilot chamber (3).

10. A valve arrangement according to any one of claims 1-9, wherein the pilot pressure is actively controlled with an electrical actuator (5) such as a solenoid or a step motor.

11. A valve arrangement according to any one of claims 1-10, wherein pilot pressure is controlled with a failsafe mechanical springing valve (33) when the actuator is fed a current below a threshold value.

12. A valve arrangement according to any one of claims 1-11, wherein the main valve body moves away from the pilot chamber upon the initial pressure increase with a stroke length of about 0.05-0.5mm, preferably about 0.1 mm.

13. A valve arrangement according to any one of claims 4-6, further comprising a calibration spacer (6) for calibrating the maximum load of the first springing means 44.

14. A shock absorber (100) comprising at least one valve arrangement (1a; 1b) according to any one of the preceding claims.

15. A method for controlling a damping medium flow between damping chambers of a shock absorber by means of a valve arrangement comprising a valve housing (2) comprising a first and a second port (7, 8), a pilot chamber (3) being in fluid communication with said first and/or second port, wherein a pilot pressure (Pp) is defined by a hydraulic pressure in said pilot chamber, and a main valve member (4) being axially movably arranged in said valve housing and being arranged to interact with a main valve seat (9) of said valve housing in order to restrict a main fluid flow (21) between said first and second ports (7, 8) in response to said pilot pressure acting on said main valve member, the method comprising the steps of
- resiliently loading (S1) a valve member (4) in a steady-state position,
- moving (S2) the main valve member (4), during an initial pressure increase of the main fluid, in a direction away from the pilot chamber (3), so as to increase the volume of the pilot chamber.

16. A method according to claim 15, further comprising the subsequent step of
- moving (S3) the main valve member (4) in a direction towards the pilot chamber (3), so as to subsequently decrease the volume of the pilot chamber, when the pressure of the main fluid flow exceeds a predetermined value being higher than the initial pressure increase.
